# EUROPÄISCHE PATENTSCHRIFT

(11) **EP 3 836 762 B1**
(45) Veröffentlichungstag und Bekanntmachung des Hinweises auf die Patenterteilung: **08.02.2023**
(21) Anmeldenummer: 19215981.2
(22) Anmeldetag: 13.12.2019
(51) Int. Cl.: H05H 1/54, F03H 1/00

(54) **NEUTRALISATOR FÜR EIN IONENTRIEBWERK, VERFAHREN ZUM BETREIBEN EINES NEUTRALISATORS UND IONENTRIEBWERK**
NEUTRALIZER FOR AN ION THRUSTER, A METHOD FOR OPERATING A NEUTRALIZER AND AN ION THRUSTER
NEUTRALISEUR POUR UN MOTEUR-FUSÉE IONIQUE, PROCÉDÉ DE FONCTIONNEMENT D'UN NEUTRALISEUR ET MOTEUR-FUSÉE IONIQUE

(43) Veröffentlichungstag der Anmeldung: 16.06.2021
(73) Patentinhaber: Airbus Defence and Space GmbH, 82024 Taufkirchen (DE)
(72) Erfinder: Hey, Franz Georg, 82024 Taufkirchen (DE); Kottke, Nils Gerrit, 82024 Taufkirchen (DE); Kornfeld, Günter, 89275 Elchingen (DE)
(74) Vertreter: Schicker, Silvia

(56) Entgegenhaltungen:
- WO-A1-2017/176843
- WO-A1-2019/116371
- US-A1- 2013 125 526
- Seth Joseph Thompson: "IODINE COMPATIBLE HOLLOW CATHODE", , 14. Juni 2019 (2019-06-14), XP055695257, Gefunden im Internet: URL:https://mountainscholar.org/bitstream/ handle/10217/195377/Thompson_colostate_005 3N_15423.pdf?sequence=1&isAllowed=y [gefunden am 2020-05-14]
- Kurt A Polzin ET AL: "Propulsion System Development for the Iodine Satellite (iSAT) Demonstration Mission", IEPC-2015-09/ISTS-2015-b-09 Presented at Joint Conference of 30th International Symposium on Space Technology and Science, 4. Juli 2015 (2015-07-04), XP055292349, Gefunden im Internet: URL:http://erps.spacegrant.org/uploads/ima ges/2015Presentations/IEPC-2015-09_ISTS-20 15-b-09.pdf [gefunden am 2016-07-29]
- L G Vintizenko ET AL: "Hollow-Cathode Low-Pressure Arc Discharges and Their Application in Plasma Generators and Charged-Particle Sources", Russian Physics Journal, 1. September 2001 (2001-09-01), Seiten 927-936, XP055695636, New York DOI: 10.1023/A:1014353721504 Gefunden im Internet: URL:https://link.springer.com/content/pdf/ 10.1023/A:1014353721504.pdf [gefunden am 2020-05-14]
- K. M. POOLE: "Emission from Hollow Cathodes", JOURNAL OF APPLIED PHYSICS, Bd. 26, Nr. 9, 1. September 1955 (1955-09-01), Seiten 1176-1179, XP055695634, US ISSN: 0021-8979, DOI: 10.1063/1.1722174
- Anonymous: "Iodine compatible hollow cathode", , 14. Juni 2019 (2019-06-14), XP055695241, Gefunden im Internet: URL:https://mountainscholar.org/handle/102 17/195377?show=full [gefunden am 2020-05-14]

## Beschreibung

Die vorliegende Erfindung betrifft einen zum Einsatz mit einem Ionentriebwerk geeigneten Neutralisator. Ferner betrifft die Erfindung ein Verfahren zum Betreiben eines derartigen Neutralisators. Schließlich betrifft die Erfindung ein mit einem derartigen Neutralisator ausgestattetes Ionentriebwerk.

Als Antrieb für Raumfahrzeuge genutzte Ionentriebwerke erzeugen Schub und damit Antriebsenergie, indem ein Treibstoffgas zunächst ionisiert wird und die Gasteilchen anschließend in einem elektrischen Feld beschleunigt werden. In einem Neutralisator werden die beschleunigten Gasteilchen elektrisch neutralisiert und schließlich in Form eines Strahls mit einer Geschwindigkeit von 10 bis 130 km/s ausgestoßen. Gängige Neutralisatoren sind üblicherweise als Hohlkathode ausgeführt, die beispielsweise eine LaB₆- oder Barium-Dispenser-Kathode als Elektronen-Emitter umfassen kann. Derzeit werden Ionentriebwerke in der Regel mit Xenon als Treibstoff betrieben. Xenon ist jedoch teuer. Es gibt daher Bestrebungen, Ionentriebwerke zu entwickeln, die mit alternativen Treibstoffen mit einer guten Verfügbarkeit und einer hohen Speicherdichte, wie z.B. Iod oder anderen Halogenen betrieben werden können. Diese alternativen Treibstoffe sind jedoch inkompatibel mit den bekannten Neutralisatoren, da die Treibstoffe die Materialien der Dispenser-Kathoden im Betrieb der Neutralisatoren bei hohen Temperaturen kontaminieren und damit die Funktionsfähigkeit der Dispenser-Kathoden beeinträchtigen können.

In der Master Arbeit "Iodine compatible hollow cathode" von Seth Joseph Thompson, Colorado State University, 2019, wird diskutiert, ein Ionentriebwerk mit einem Halogen wie beispielsweise Iod als Treibstoff zu betreiben, bei dem der Elektronen-Emitter einer Hohlkathode Wolfram enthält. Die Kathodenröhre ist innenseitig mit Graphit beschichtet.

In dem wissenschaftlichen Artikel "Propulsion System Development for the Iodine Satellite (iSat) Demonstration Mission" von Kurt A. Polzin et al., Joint Conference of the 30th ISTS, 2015, wird ebenfalls diskutiert, Iod als Treibstoff in einem Ionentriebwerk in Kombination mit einem wolframhaltigen Elektronen-Emitter zu verwenden.

Der wissenschaftliche Artikel "Hollow-Cathode Low-Pressure Arc Discharges and Their Application in Plasma Generators and Charged-Particle Sources" von L. G. Vintizenko et al., Russian Physics Journal, Vol.44 No.9, 2001, behandelt die Erzeugung eines Niederdruck-Plasmas mit Hilfe einer Hohlkathode.

Weiterer Stand der Technik aus WO 2017/176843 A1 bekannt.

Der vorliegenden Erfindung liegt die Aufgabe zugrunde, einen Neutralisator anzugeben, der zum Einsatz in einem mit Iod und/oder einem anderen Halogen als Treibstoff betreibbaren Ionentriebwerk geeignet ist. Ferner liegt der Erfindung die Aufgabe zugrunde, ein Verfahren zum Betreiben eines derartigen Neutralisators bereitzustellen. Schließlich ist die Erfindung auf die Aufgabe gerichtet, ein mit einem derartigen Neutralisator ausgestattetes Ionentriebwerk anzugeben.

Diese Aufgabe wird durch einen Neutralisator mit den Merkmalen des Anspruchs 1, ein Verfahren mit den Merkmalen des Anspruchs 8 und ein Ionentriebwerk mit den Merkmalen des Anspruchs 13 gelöst.

Bevorzugte Ausführungsformen der vorliegenden Erfindung sind in den abhängigen Ansprüchen definiert.

Ein zur Verwendung in einem Ionentriebwerk geeigneter Neutralisator umfasst eine Halogengasquelle sowie ein Elektrodenrohr. Die Halogengasquelle ist dazu eingerichtet, ein Halogengas, insbesondere gasförmiges Iod bereitzustellen. Die Halogengasquelle kann einen Speicherbehälter umfassen, in dem das zu speichernde Halogen in fester oder gasförmiger Form aufgenommen ist. Falls das Halogen in dem Speicherbehälter der Halogengasquelle in fester Form gespeichert ist, umfasst die Halogengasquelle vorzugsweise ferner einen Verdampfer, der dazu eingerichtet ist, das Halogen vom festen in den gasförmigen Aggregatzustand zu überführen.

Das Elektrodenrohr hat eine mit der Halogengasquelle verbundene Eintrittsöffnung zur Zufuhr des von der Halogengasquelle bereitgestellten Halogengases in das Elektrodenrohr. Ferner umfasst das Elektrodenrohr einen im Inneren des Elektrodenrohrs angeordneten Entladungsraum zur Erzeugung eines Plasmas aus dem in das Elektrodenrohr zugeführten Halogengas. Ferner ist das Elektrodenrohr mit einer Austrittsöffnung zur Abfuhr des in dem Entladungsraum erzeugten Plasmas sowie freien Elektronen aus dem Elektrodenrohr versehen.

Im Betrieb des Neutralisators wird das Halogengas, das über die Eintrittsöffnung des Elektrodenrohrs in das Elektrodenrohr geleitet wird, im Entladungsraum des Elektrodenrohrs zumindest teilweise ionisiert, d.h. im Entladungsraum des Elektrodenrohrs werden ein Plasma sowie freie Elektronen erzeugt. Die Ionisierung des Halogengases erfolgt durch Elektronen, die im Entladungsraum des Elektrodenrohrs mit zunächst neutralen Gasatomen zusammenstoßen und diese dadurch ionisieren. Diese Elektronen werden von einem im Entladungsraum des Elektrodenrohrs angeordneten Elektronen-Emitter bereitgestellt. Der Elektronen-Emitter besteht zumindest teilweise aus Wolfram.

Im Betrieb des Neutralisators erreicht der Elektronen-Emitter sehr hohe Betriebstemperaturen von bis zu 3000 °C. Dadurch verdampft das Material des Elektronen-Emitters, was üblicherweise die Erosion und folglich eine signifikante Verkürzung der Lebensdauer des Elektronen-Emitters zufolge hat. Das von dem zumindest teilweise aus Wolfram bestehenden Elektronen-Emitter verdampfende Wolfram reagiert in dem hier beschriebenen Neutralisator jedoch mit dem im Entladungsraum des Elektrodenrohrs vorhandenen Halogen, so dass sich ein Wolframhalogenid, beispielsweise Wolframiodid bildet. Das Wolframhalogenid wird stochastisch zum Elektronen-Emitter zurücktransportiert und zerfällt dort aufgrund der an der Oberfläche des Elektronen-Emitters vorherrschenden hohen Temperaturen wieder in seine Bestandteile. Das bei dieser Zerfallsreaktion freiwerdende Wolfram lagert sich auf der Oberfläche des Elektronen-Emitters ab und wirkt somit der Erosion des Elektronen-Emitters entgegen. Der Neutralisator ist daher zum Einsatz in einem mit Iod und/oder einem anderen Halogen als Treibstoff betreibbaren Ionentriebwerk geeignet.

Der Neutralisator ist vorzugsweise mit einer Heizeinrichtung zur Beheizung des Elektronen-Emitters ausgestattet. Die Heizeinrichtung ist vorzugsweise dazu eingerichtet, den Elektronen-Emitter auf Temperaturen von bis zu 2000 °C zu erhitzen.

Der Elektronen-Emitter kann beispielsweise in Form eines Wolfram-Filaments ausgebildet sein. Das Wolfram-Filament kann beispielsweise eine Wendelform oder eine Mäanderform haben.

Das Elektrodenrohr ist vorzugsweise in Form einer Hohlkathode ausgebildet. Mit einer Hohlkathode ausgestattete Neutralisatoren zeichnen sich gegenüber anderen Elektronenquellen-Konzepten durch ihre hohe Ladungsträgerdichte aus und sind daher in der Raumfahrt besonders vorteilhaft einsetzbar.

Der Neutralisator kann ferner eine benachbart zu der Austrittsöffnung des Elektrodenrohrs angeordnete Keeper-Elektrode umfassen. Die Keeper-Elektrode ist vorzugsweise in Form einer Keeper-Anode ausgebildet. Bei einer derartigen Ausgestaltung des Neutralisators liegt an der Keeper-Elektrode eine positive Spannung an, so dass die aus dem Plasma im Entladungsraum des Elektrodenrohrs austretenden Elektronen in Richtung der Keeper-Anode beschleunigt werden und durch die Austrittsöffnung des Elektrodenrohrs aus dem Elektrodenrohr austreten können. Die Keeper-Elektrode ist vorzugsweise so ausgebildet, dass sie einen zu der Austrittsöffnung des Elektrodenrohrs benachbarten Bereich des Elektrodenrohrs zumindest teilweise umgibt. Ferner weist die Keeper-Elektrode vorzugsweise ebenfalls eine Austrittsöffnung auf, durch die die in Richtung der Keeper-Elektrode beschleunigten Elektronen hindurchtreten können. Die Elektronen können dann zur Neutralisation eines Ionenstrahls genutzt werden, der von einem mit dem Neutralisator ausgestatteten Ionentriebwerk erzeugt wird.

Zusätzlich oder alternativ dazu kann zwischen dem Elektronen-Emitter und dem Elektrodenrohr auch eine Potenzialdifferenz anliegen, die dafür sorgt, dass die Gasentladung im Entladungsraum des Elektrodenrohrs auch ohne Keeper-Elektrode gezündet werden kann. Der Neutralisator zeichnet sich dann durch einen besonders einfachen Aufbau auf, da auf eine Keeper-Elektrode verzichtet werden kann.

Erfindungsgemäß ist in dem Entladungsraum des Elektrodenrohrs eine zusätzliche Wolframquelle angeordnet, die dazu eingerichtet ist, mit dem in das Elektrodenrohr zugeführten Halogengas zu reagieren, um ein Wolframhalogenid zu bilden. Auch das durch die Reaktion der zusätzlichen Wolframquelle mit dem Halogengas gebildete Wolframhalogenid zerfällt an der Oberfläche des Elektronen-Emitters wieder in seine Bestandteile, so dass sich zusätzliches Wolfram auf der Oberfläche des Elektronen-Emitters ablagern kann. Dadurch kann der Erosion des zumindest teilweise aus Wolfram bestehenden Elektronen-Emitters weiter entgegengewirkt werden. Die zusätzliche Wolframquelle ist vorzugsweise unbeheizt, um die Reaktion des Wolframs zu Wolframhalogenid zu fördern. Es ist jedoch auch denkbar, die zusätzliche Wolframquelle gesteuert zu beheizen oder thermisch an eine Wärmequelle zu koppeln, um eine gewünschte Rate an Wolframiodidbildung zu gewährleisten.

Bei einem Verfahren zum Betreiben eines zur Verwendung in einem Ionentriebwerk vorgesehenen Neutralisators wird ein Halogengas durch eine Eintrittsöffnung eines Elektrodenrohrs in das Elektrodenrohr zugeführt. Aus dem in das Elektrodenrohr zugeführten Halogengas wird in einem Entladungsraum des Elektrodenrohrs ein Plasma erzeugt, d.h. das Halogengas wird durch freie Elektronen, die im Entladungsraum des Elektrodenrohrs mit zunächst neutralen Gasatomen zusammenstoßen, ionisiert. Die freien Elektronen werden von einem Elektronen-Emitter emittiert, der in dem Entladungsraum des Elektrodenrohrs angeordnet ist. Der Elektronen-Emitter besteht zumindest teilweise aus Wolfram.

Vorzugsweise wird der Elektronen-Emitter beheizt.

In einer bevorzugten Ausführungsform des Verfahrens ist der Elektronen-Emitter in Form eines Wolfram-Filaments ausgebildet. Zusätzlich oder alternativ dazu kann das Elektrodenrohr in Form einer Hohlkathode ausgebildet sein.

Das Plasma kann mithilfe einer benachbart zu der Austrittsöffnung des Elektrodenrohrs angeordneten Keeper-Elektrode erzeugt werden. Das Elektrodenrohr und die Keeper-Elektrode können dann mit einer gemeinsamen Energiequelle verbunden sein.

Zwischen dem Elektronen-Emitter und dem Elektrodenrohr kann jedoch auch eine Potenzialdifferenz angelegt werden. Falls gewünscht, kann dann auf die Bereitstellung einer Keeper-Elektrode verzichtet werden.

Erfindungsgemäß ist in dem Entladungsraum des Elektrodenrohrs ist eine zusätzliche Wolframquelle angeordnet, die mit dem in das Elektrodenrohr zugeführten Halogengas reagiert, um ein Wolframhalogenid zu bilden.

Das in dem Entladungsraum erzeugte Plasma wird durch eine Austrittsöffnung des Elektrodenrohrs aus dem Elektrodenrohr abgeführt.

Ein Ionentriebwerk umfasst einen oben beschriebenen Neutralisator. Das Ionentriebwerk ist vorzugsweise mit einem Halogen, insbesondere Iod als Treibstoff betreibbar.

Eine bevorzugte Ausführungsform der Erfindung wird nun anhand der beigefügten, schematischen Zeichnung näher erläutert, von denen
- Figur 1: eine schematische Darstellung eines Ionentriebwerks zeigt,
- Figur 2: eine Ausführungsform eines zur Verwendung in dem Ionentriebwerk gemäß Figur 1 geeigneten Neutralisators zeigt, und
- Figur 3: eine alternative Ausführungsform eines zur Verwendung in dem Ionentriebwerk gemäß Figur 1 geeigneten Neutralisators zeigt.

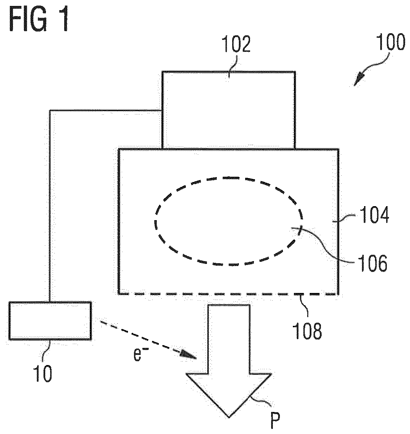

Ein in Figur 1 gezeigtes Ionentriebwerk 100 umfasst einen Treibstoffbehälter 102, der mit einem Halogentreibstoff, insbesondere Iod gefüllt ist. Der in dem Treibstoffbehälter 102 aufgenommene Treibstoff befindet sich vorzugsweise im gasförmigen oder festen Aggregatzustand. Im Betrieb des Ionentriebwerks 100 wird das Treibstoffgas aus dem Treibstoffbehälter 102 in eine Ionisatorkammer 104 geleitet. In der Ionisatorkammer 104 wird das Treibstoffgas in üblicher Weise ionisiert, so dass in der Ionisatorkammer 104 ein positiv geladenes Plasma 106 entsteht. Wie durch den Pfeil P in Figur 1 angedeutet, verlassen die positiv geladenen Gasionen die Ionisatorkammer 104 durch in einer Wand der Ionisatorkammer 104 vorgesehene Gasaustrittsöffnungen 108 und werden durch Elektronen neutralisiert, die von einem Neutralisator 10 bereitgestellt werden.

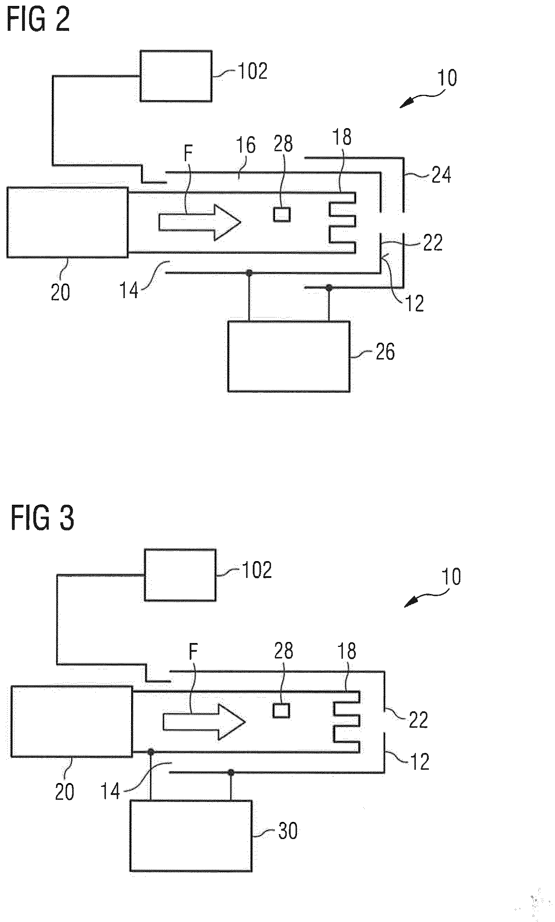

Eine Detaildarstellung eines ersten Ausführungsbeispiels des Neutralisators 10 ist in Figur 2 gezeigt. Der Neutralisator 10 umfasst eine Halogengasquelle, die hier durch den Treibstoffbehälter 102 des Ionentriebwerks 100 gebildet wird. Es ist jedoch auch denkbar, den Neutralisator 10 mit einer separat von dem Treibstoffbehälter 102 des Ionentriebwerks 10 ausgebildeten Halogengasquelle auszustatten. Ferner umfasst der Neutralisator 10 ein in Form einer Hohlkathode ausgebildetes Elektrodenrohr 12. Das Elektrodenrohr 12 hat eine Eintrittsöffnung 14, die mit der Halogengasquelle, d.h. dem Treibstoffbehälter 102, verbunden ist, so dass durch die Eintrittsöffnung 14, wie durch den Pfeil F angedeutet, Halogengas, d.h. insbesondere Iodgas, in das Elektrodenrohr 12 zugeführt werden kann.

In einem Innenraum des Elektrodenrohrs 12 ist ein Entladungsraum 16 definiert, in dem ein zumindest teilweise aus Wolfram bestehender Elektronen-Emitter 18 angeordnet ist. Insbesondere ist der Elektronen-Emitter 18 in Form eines Wolfram-Filaments ausgebildet und mit einer Heizeinrichtung 20 verbunden, die dazu in der Lage ist, den Elektronen-Emitter 18 auf eine Temperatur von bis zu 2000 °C aufzuheizen. Im Bereich eines der Eintrittsöffnung 14 gegenüberliegenden Endes ist das Elektrodenrohr 12 mit einer Austrittsöffnung 22 versehen. Benachbart zu der Austrittsöffnung 22 ist eine Keeper-Elektrode 24, die hier in Form einer Keeper-Anode ausgebildet ist, vorgesehen. Das in Form einer Hohlkathode ausgebildete Elektrodenrohr 12 und die Keeper-Elektrode 24 sind mit einer gemeinsamen Energiequelle 26 verbunden. Schließlich ist in dem Elektrodenrohr 12 eine zusätzliche Wolframquelle 28 vorgesehen, die hier in Form eines unbeheizten Einsatzes ausgebildet ist.

Im Betrieb des Neutralisators 10 wird das Halogengas über die Eintrittsöffnung 14 des Elektrodenrohrs 12 in das Elektrodenrohr 12 geleitet. Der mittels der Heizeinrichtung 20 beheizte Elektronen-Emitter 18 emittiert Elektronen, die mit den zunächst noch neutralen Molekülen des in den Entladungsraum 16 des Elektrodenrohrs 12 strömenden Halogengases zusammenstoßen. Dadurch wird das Halogengas ionisiert, das heißt im Entladungsraum 16 des Elektrodenrohrs 12 entstehen ein Plasma sowie freie Elektronen. Das Plasma und die freien Elektronen werden über die Austrittsöffnung 22 aus dem Entladungsraum 12 abgeführt, wobei die freien Elektronen, wie in Figur 1 gezeigt, zur Neutralisation des aus der Ionisatorkammer 104 des Ionentriebwerks 100 austretenden Treibstoffplasmas verwendet werden.

Bei den im Betrieb des Neutralisators 10 auftretenden hohen Betriebstemperaturen des Elektronen-Emitters 18 verdampft das Wolfram-Material des Elektronen-Emitters 18 in den Entladungsraum 16, was üblicherweise die Erosion und folglich eine signifikante Verkürzung der Lebensdauer des Elektronen-Emitters zufolge hat. Bei dem hier beschriebenen Neutralisator 10 reagiert das verdampfte Wolfram jedoch mit dem ebenfalls im Entladungsraum 16 des Elektrodenrohrs 12 vorhandenen Halogengas, so dass sich ein Wolframhalogenid, beispielsweise Wolframiodid bildet. Auch das Material der zusätzlichen Wolframquelle 28 reagiert mit dem Halogengas unter Bildung von Wolframhalogenid, insbesondere Wolframiodid.

Aufgrund der verhältnismäßig hohen Gasdichte im Entladungsraum 16 des Elektrodenrohrs 12 wird das im Entladungsraum 16 gebildete Wolframhalogenid stochastisch zum Elektronen-Emitter 18 zurücktransportiert und zerfällt dort aufgrund der an der Oberfläche des Elektronen-Emitters 18 vorherrschenden hohen Temperaturen wieder in seine Bestandteile. Das bei dieser Zerfallsreaktion freiwerdende Wolfram lagert sich auf der Oberfläche des Elektronen-Emitters 18 ab und wirkt somit der Erosion des Elektronen-Emitters 18 entgegen.

Die in Figur 3 gezeigte alternative Ausführungsform eines Neutralisators 10 unterscheidet sich von der Anordnung gemäß Figur 2 dadurch, dass der Elektronen-Emitter 18 und das Elektrodenrohr 12 mit einer Energiequelle 30 verbunden sind, durch die zwischen dem Elektronen Emitter 18 und den Elektrodenrohr 12 eine Potenzialdifferenz angelegt wird. Die Potenzialverschiebung zwischen dem Elektronen-Emitter 18 und dem Elektrodenrohr 12 ermöglicht es, dass die Gasentladung im Entladungsraum 16 des Elektrodenrohrs 12 auch ohne Keeper-Elektrode gezündet werden kann. Bei dem in Figur 3 gezeigten Neutralisator 10 kann daher auf eine Keeper-Elektrode verzichtet werden.

## Patentansprüche

1. Neutralisator (10) zur Verwendung in einem Ionentriebwerk (100), der umfasst:
- eine Halogengasquelle (102);
- ein Elektrodenrohr (12), das eine mit der Halogengasquelle (102) verbundene Eintrittsöffnung (14) zur Zufuhr eines von der Halogengasquelle (102) bereitgestellten Halogengases in das Elektrodenrohr (12), einen Entladungsraum (16) zur Erzeugung eines Plasmas aus dem in das Elektrodenrohr (12) zugeführten Halogengas sowie eine Austrittsöffnung (22) zur Abfuhr des in dem Entladungsraum (16) erzeugten Plasmas sowie freien Elektronen aus dem Elektrodenrohr (12) umfasst; und
- einen in dem Entladungsraum (16) des Elektrodenrohrs (12) angeordneten Elektronen-Emitter (18), wobei der Elektronen-Emitter (18) zumindest teilweise aus Wolfram besteht,
**dadurch gekennzeichnet, dass** in dem Entladungsraum (16) des Elektrodenrohrs (12) eine zusätzliche, von dem Elektrodenrohr (12) getrennt ausgebildete Wolframquelle (28) angeordnet ist, die dazu eingerichtet ist, mit dem in das Elektrodenrohr (12) zugeführten Halogengas zu reagieren, um ein Wolframhalogenid zu bilden.

2. Neutralisator (10) nach Anspruch 1,
der ferner eine Heizeinrichtung (20) zur Beheizung des Elektronen-Emitters (18) umfasst.

3. Neutralisator (10) nach Anspruch 1 oder 2,
wobei der Elektronen-Emitter (18) in Form eines Wolfram-Filaments ausgebildet ist.

4. Neutralisator (10) nach einem der Ansprüche 1 bis 3,
wobei das Elektrodenrohr (12) in Form einer Hohlkathode ausgebildet ist.

5. Neutralisator (10) nach einem der Ansprüche 1 bis 4,
der ferner eine benachbart zu der Austrittsöffnung (22) des Elektrodenrohrs (12) angeordnete Keeper-Elektrode (24) umfasst.

6. Neutralisator (10) nach Anspruch 5,
wobei das Elektrodenrohr (12) und die Keeper-Elektrode (24) mit einer gemeinsamen Energiequelle (26) verbunden sind.

7. Neutralisator (10) nach einem der Ansprüche 1 bis 6,
wobei zwischen dem Elektronen-Emitter (18) und dem Elektrodenrohr (12) eine Potenzialdifferenz anliegt.

8. Verfahren zum Betreiben eines Neutralisators (10) zur Verwendung in einem Ionentriebwerk (100), wobei das Verfahren umfasst:
- Zuführen eines Halogengases in ein Elektrodenrohr (12) durch eine Eintrittsöffnung (14) des Elektrodenrohrs (12);
- Erzeugen eines Plasmas sowie freien Elektronen aus dem in das Elektrodenrohr (12) zugeführten Halogengas in einem Entladungsraum (16) des Elektrodenrohrs (12), wobei ein in dem Entladungsraum (16) des Elektrodenrohrs (12) angeordneter Elektronen-Emitter (18), der zumindest teilweise aus Wolfram besteht, Elektronen emittiert, und wobei in dem Entladungsraum (16) des Elektrodenrohrs (12) eine zusätzliche, von dem Elektrodenrohr (12) getrennt ausgebildete Wolframquelle (28) angeordnet ist, die mit dem in das Elektrodenrohr (12) zugeführten Halogengas reagiert, um ein Wolframhalogenid zu bilden; und
- Abführen des in dem Entladungsraum (16) erzeugten Plasmas und der freien Elektronen aus dem Elektrodenrohr (12) durch eine Austrittsöffnung (22) des Elektrodenrohrs (12).

9. Verfahren nach Anspruch 8,
wobei der Elektronen-Emitter (18) beheizt wird.

10. Verfahren nach Anspruch 8 oder 9,
wobei der Elektronen-Emitter (18) in Form eines Wolfram-Filaments ausgebildet ist und/oder wobei das Elektrodenrohr (12) in Form einer Hohlkathode ausgebildet ist.

11. Verfahren nach einem der Ansprüche 8 bis 10,
wobei das Plasma mithilfe einer benachbart zu der Austrittsöffnung (22) des Elektrodenrohrs (12) angeordneten Keeper-Elektrode (24) erzeugt wird, wobei das Elektrodenrohr (12) und die Keeper-Elektrode (24) insbesondere mit einer gemeinsamen Energiequelle (26) verbunden sind.

12. Verfahren nach einem der Ansprüche 8 bis 11,
wobei zwischen dem Elektronen-Emitter (18) und dem Elektrodenrohr (12) eine Potenzialdifferenz angelegt wird.

13. Ionentriebwerk (100) mit einem Neutralisator (10) nach einem der Ansprüche 1 bis 7.

## Claims

1. A neutralizer (10) for use in an ion engine (100), comprising:
- a halogen gas source (102);
- an electrode tube (12) comprising an inlet opening (14) connected to the halogen gas source (102) for supplying a halogen gas provided by the halogen gas source (102) into the electrode tube (12), a discharge space (16) for generating a plasma from the halogen gas supplied into the electrode tube (12), and an outlet opening (22) for discharging the plasma generated in the discharge space (16) and free electrons from the electrode tube (12); and
- an electron emitter (18) arranged in the discharge space (16) of the electrode tube (12), the electron emitter (18) being at least partially made of tungsten,
**characterized in that** an additional tungsten source (28) formed separate from the electrode tube (12) is arranged in the discharge space (16) of the electrode tube (12), which is adapted to react with the halogen gas supplied into the electrode tube (12) to form a tungsten halide.

2. The neutralizer (10) according to claim 1,
further comprising a heating device (20) for heating the electron emitter (18).

3. The neutralizer (10) according to claim 1 or 2,
wherein the electron emitter (18) is designed in the form of a tungsten filament.

4. The neutralizer (10) according to any one of claims 1 to 3,
wherein the electrode tube (12) is designed in the form of a hollow cathode.

5. The neutralizer (10) according to any one of claims 1 to 4,
further comprising a keeper electrode (24) arranged adjacent to the outlet opening (22) of the electrode tube (12).

6. The neutralizer (10) according to claim 5,
wherein the electrode tube (12) and the keeper electrode (24) are connected to a common energy source (26).

7. The neutralizer (10) according to any one of claims 1 to 6,
wherein a potential difference is applied between the electron emitter (18) and the electrode tube (12).

8. A method of operating a neutralizer (10) for use in an ion engine (100), the method comprising
- supplying a halogen gas into an electrode tube (12) through an inlet opening (14) of the electrode tube (12);
- generating a plasma and free electrons from the halogen gas supplied into the electrode tube (12) in a discharge space (16) of the electrode tube (12), wherein an electron emitter (18) arranged in the discharge space (16) of the electrode tube (12) and being at least partially made of tungsten emits electrons, and wherein an additional tungsten source (28) formed separate from the electrode tube (12) is arranged in the discharge space (16) of the electrode tube (12), which reacts with the halogen gas supplied into the electrode tube (12) to form a tungsten halide; and
- discharging the plasma generated in the discharge chamber (16) and the free electrons from the electrode tube (12) through an outlet opening (22) of the electrode tube (12).

9. The method according to claim 8,
wherein the electron emitter (18) is heated.

10. The method according to claim 8 or 9,
wherein the electron emitter is designed in the form of a tungsten filament and/or wherein the electrode tube (12) is designed in the form of a hollow cathode.

11. The method according to any one of claims 8 to 10,
wherein the plasma is generated with the aid of a keeper electrode (24) arranged adjacent to the outlet opening (22) of the electrode tube (12), wherein the electrode tube (12) and the keeper electrode (24) in particular are connected to a common energy source (26).

12. The method according to any one of claims 8 to 11,
wherein a potential difference is applied between the electron emitter (18) and the electrode tube (12).

13. Ion engine (100) with a neutralizer (10) according to any one of claims 1 to 7.

## Revendications

1. Neutraliseur (10) destiné à être utilisé dans un moteur à propulsion ionique (100), comprenant :
- une source d'halogène (102) ;
- un tube d'électrode (12) comprenant un orifice d'admission (14) relié à la source d'halogène (102) servant à alimenter en halogène par la source d'halogène (102) le tube d'électrode (12), un espace de décharge (16) servant à générer un plasma à partir de l'halogène fourni au tube d'électrode (12), et un orifice de sortie (22) destinée à décharger le plasma généré dans l'espace de décharge (16) ainsi que des électrons libres provenant du tube d'électrode (12) ; et
- un émetteur d'électrons (18) disposé dans l'espace de décharge (16) du tube d'électrode (12), l'émetteur d'électrons (18) étant au moins en partie constitué de tungstène,
**caractérisé en ce qu'**un source supplémentaire de tungstène (28) formée séparément du tube d'électrode (12) est disposée dans l'espace de décharge (16) du tube d'électrode (12) qui est conçu pour réagir à l'halogène fourni dans le tube d'électrode (12) pour former un halogénure de tungstène.

2. Neutraliseur (10) selon la revendication 1,
comprenant en outre un dispositif de chauffage (20) destiné à chauffer l'émetteur d'électrons (18).

3. Neutraliseur (10) selon la revendication 1 ou 2,
dans lequel l'émetteur d'électrons (18) est conçu sous la forme d'un filament de tungstène.

4. Neutraliseur (10) selon l'une quelconque des revendications 1 à 3,
dans lequel le tube d'électrons (12) est conçu sous la forme d'une cathode creuse.

5. Neutraliseur (10) selon l'une quelconque des revendications 1 à 4,
comprenant en outre une électrode de décharge (24) disposée à proximité de l'orifice de sortie (22) du tube d'électrode (12).

6. Neutraliseur (10) selon la revendication 5,
dans lequel le tube d'électrode (12) et l'électrode de décharge (24) sont reliés à une source d'énergie commune (26).

7. Neutraliseur (10) selon l'une quelconque des revendications 1 à 6,
dans lequel une différence de potentiel est appliquée entre l'émetteur d'électrons (18) et le tube d'électrode (12).

8. Procédé de fonctionnement d'un neutraliseur (10) destiné à être utilisé dans un moteur à propulsion ionique (100), le procédé consistant à :
- alimenter en halogène un tube d'électrode (12) par un orifice d'admission (14) du tube d'électrode (12) ;
- générer un plasma ainsi que des électrons libres à partir de l'halogène fourni dans le tube d'électrode (12) dans un espace de décharge (16) du tube d'électrode (12), un émetteur d'électrons (18) étant disposé dans l'espace de décharge (16) du tube d'électrode (12) et étant au moins en partie constitué de tungstène émis par les électrons, et une source supplémentaire de tungstène (28) formée séparément du tube d'électrode (12) étant disposée dans l'espace de décharge (16) du tube d'électrode (12) qui réagit à l'halogène fourni dans le tube d'électrode (12) pour former un halogénure de tungstène ; et
- décharger le plasma généré dans la chambre de décharge (16) et les électrons libres du tube d'électrode (12) par un orifice de sortie (22) du tube d'électrode (12).

9. Procédé selon la revendication 8,
dans lequel l'émetteur d'électrons (18) est chauffé.

10. Procédé selon la revendication 8 ou 9,
dans lequel l'émetteur d'électrons (18) est conçu sous la forme d'un filament de tungstène et/ou dans lequel le tube d'électrode (12) est conçu sous la forme d'une cathode creuse.

11. Procédé selon l'une quelconque des revendications 8 à 10,
dans lequel le plasma est généré à l'aide d'une électrode de décharge (24) disposée à proximité de l'orifice de sortie (22) du tube d'électrode (12), le tube d'électrode (12) et l'électrode de décharge (24) en particulier sont reliés à une source d'énergie commune (26).

12. Procédé selon l'une quelconque des revendications 8 à 11,
dans lequel une différence de potentiel est appliquée entre l'émetteur d'électrons (18) et le tube d'électrode (12).

13. Moteur à propulsion ionique (100) équipé d'un neutraliseur (10) selon l'une quelconque des revendications 1 à 7.
